# EUROPEAN PATENT APPLICATION

(11) **EP 3 809 591 A1**
(43) Date of publication of application: **21.04.2021**
(21) Application number: 19382255.8
(22) Date of filing: 14.10.2019
(51) Int. Cl.: H02S 40/42, H02S 40/44

(54) **SOLAR COLLECTOR PANEL AND SOLAR COLLECTOR PANELS SYSTEM**

(71) Applicant: Endef Engineering, S.L., 50820 San Juan de Mozarrifar (ES)
(72) Inventor: Brun Gresa, Gonzalo, 50820 San Juan de Mozarrifar (ES); Guedea Medrano, Isabel, 50820 San Juan de Mozarrifar (ES); Simón Allué, Raquel, 50820 San Juan de Mozarrifar (ES); Villén Domingo, Raúl, 50820 San Juan de Mozarrifar (ES)
(74) Representative: Vargas Vilardosa, Antonio

(57) **Abstract**

Solar collector panel (1, 10, 20) comprising a plurality of air ducts (4) and at least one air inlet opening (21) and/or at least one air outlet opening (22), the air ducts (4) comprising, respectively, air inlet cross-sections (41) or air outlet cross-sections (42) transverse to said ducts (4) and communicated with the respective opening (21, 22). The invention is characterized in that the respective cross-sections (41, 42) are oriented towards the respective opening (21, 22), transversely to a direction of the air flow (30, 31, 32) at said opening (21, 22).

## Description

### Background of the invention

The present invention relates to a solar collector panel, in particular, a hybrid solar collector panel, for collecting solar radiation and evacuating heat as an air flow goes through the panel, according to the preamble of claim 1. The present invention also relates to a system of such solar collector panels. Solar collector panels collect the energy of solar radiation for its utilization through the flow of air heated by convection as going through the panel. Hot air can be used, for example, for industrial air conditioning as well as domestic air conditioning, in single-family or multi-family buildings or in common areas of buildings, especially, in common areas that tend to concentrate humidity, such as storage rooms or garages, making it possible to lower relative humidity in such areas.

Hybrid solar collector panels (PV/T) allow producing simultaneously hot air and electrical energy from solar radiation. The electrical energy is obtained by means of photovoltaic cells that are incorporated in the panel, for example, in form of a photovoltaic plate or laminate. In hybrid solar collector panels the air flow through the panel refrigerates the photovoltaic cells, which allows improving its electrical performance as a consequence of the effect that the electrical efficiency of photovoltaic cells inherently decreases as its temperature of operation increases. This effect may be especially relevant when solar collector panels are installed in very hot areas, allowing improving its performance significantly.

An example of a hybrid solar collector panel is disclosed in WO 2012/045842 A1. This hybrid solar collector comprises a plurality of air ducts for ducting the air flow in a longitudinal direction of the panel and in a plane extending over the length and width of the panel. The air flow enters and exits the panel with a direction parallel to that of the ducts through, respectively, an inlet opening and an outlet opening arranged in respective lateral sides of the panel. The arrangement of the openings laterally in the panel provides the advantage, with respect to other configurations of solar collector panels in which the openings are arranged on lower sides, thereby making it possible to dispense with a lower housing for the suction of the air flow, that is, under the air ducts, which simplifies the installation of the panel.

From US 4,219,012 a solar collector panel is also known with a plurality of air ducts for ducting the air flow in a longitudinal direction of the panel and in a plane extending over the length and width of the panel, an air inlet opening and a an air outlet opening in lateral sides of the panel for, respectively, introducing in and extracting from the panel the air flow, perpendicularly to the longitudinal direction. At the entry to the panel, the air flow is forced to make a curvilinear path between the air inlet opening and the air inlet cross-sections, through which the air flow enters into the ducts. Likewise, in the exit of the panel, the air flow is forced to make a curvilinear path from the air outlet cross-sections, through which the air flow exits the ducts.

With the configuration of solar panels according to US 4,219,012 it is possible to increase the air flow path with respect to configurations of solar collector panels in which the air flow direction at the inlet and/or outlet openings is aligned with the ducts. As a consequence, the output air temperature that can be obtained with the panel increases, as the amount of heat transferred by convection increases, due to the longer air flow path.

In order to facilitate the air flow of between the respective openings and the respective cross-sections in the solar collector panels according to US 4,219,012, the respective cross-sections have holes of reduced area in comparison with that of the corresponding cross-sections. This configuration has the drawback of the loss of charge of the air flow as a consequence of abrupt pressure or speed gradients when it goes through the panel. This drawback is more accused in solar collector panels systems in which the panels are connected to each other side by side, so that the air flow circulates between the panels through the respective openings.

In view of the above indicated known state of the art, the present invention has the objective to provide a solar collector panel that reduces the air flow loss of charge in addition to increasing the output air temperature that can be obtained with the panel, thereby improving the overall performance of the panel. Therefore, the invention has the objective of improving the electrical and thermal performance of the hybrid solar collector panels, due to the effect of the improvement in electrical performance by decreasing the operating temperature of the photovoltaic means. Also, the invention has the objective to provide a solar collector panels system that in addition to reducing the air flow loss of charge and improve the thermal and, where appropriate, electrical performance of the panels themselves, allow a circulation of air flow between side by side interconnected panels in a simple and effective manner, in particular, by additionally reducing the loss of charge in the connections Also, the solar collector panels must allow, preferably, a simple and compact installation of the interconnected panels.

### Explanation of the invention

In accordance with the present invention, said objective is solved by the object of claim 1. Dependent claims specify preferable embodiments.

In a general aspect the invention relates to a solar collector panel, for collecting solar radiation and evacuating heat as an air flow goes through it. The solar collector panel can be, in particular, a hybrid solar collector panel. The solar collector panel comprises a plurality of air ducts for ducting of the air flow in direction from a first to a second lateral side, the first and second lateral sides opposite to each other. The ducts are arranged in a plane that extends over the length and width of the panel. Additionally, the solar collector panel comprises at least one air inlet opening and/or at least one air outlet opening for, respectively, introduce into or extracting from the panel the air flow, the openings being arranged a lateral side of the panel other than the first and second lateral sides (on the same lateral side or opposite sides of the panel).

Said air ducts comprise, respectively, air inlet cross-sections or air outlet cross-sections, transverse to the ducts and communicated with the respective openings so that the air flow, respectively, enters or exits the duct through the respective cross-sections.

Unlike the known state of the art, according to this general aspect of the invention the respective cross-sections (i.e., respectively, the air inlet cross-sections or air outlet cross-sections) are oriented towards the respective opening (i.e., respectively, the air inlet opening or the air outlet opening) transversely, in particular, perpendicularly, with respect to a direction of the air flow at said opening (i.e., respectively, the air inlet opening or the air outlet opening).

In the context of the present description and in relation to this aspect of the invention, the following definitions apply. The term "collector", as well as related terms such as "collecting" or "collection", are used in relation to the collection of energy or heat for its utilization, in particular, of the solar radiation, and includes the concepts of absorber or recuperator (analogously for corresponding related terms). "Plurality", which in the present description applies, in particular, to the term of ducts, means two or more, including therefore multiple. The term "in direction" referred to "from a first to a second lateral sides of the panel" comprises the concept of "in direction and sense", not being excluded that such direction may be variable between the corresponding lateral sides, that is, it is considered that the duct may be, in particular, straight or curved, or also inclined with respect to the corresponding lateral sides.

According to this general aspect of the invention, in addition to improve the heat transfer and the output air temperature of the panel for its utilization, by means of increasing the path of the air flow through the panel it is achieved to facilitate its circulation through the panel, since the loss charge of the air flow is reduced. The arrangement of the respective cross-sections of the ducts, wherein the respective openings are transversely oriented to a direction of the air flow at said opening, makes it possible a deflection of the air flow, respectively, from the inlet opening to the ducts or from these towards the outlet opening.

With this relative arrangement between the ducts and the respective opening or openings according to the invention, it is generated a negative pressure effect or suction of the air flow into the ducts in the inlet cross-sections, or a positive pressure or expulsion of the air flow out of the ducts in the outlet cross-sections, as the lair flow remains leeward with respect to at least on wall of the ducts. In addition, the confluence of the air flow with at least one wall of the ducts also favours the generation of turbulence, which as it is known it improves the heat transfer by convection.

In a forced air circulation through the solar collector panel, the reduction of the loss of charge obtained according to the invention means more power available for ventilation or compression of the circulating air flow and, therefore, an improvement in the overall performance of the installation.

According to another aspect of the invention, the (at least one) air inlet opening -or openings- and the (at least one) air outlet opening or openings are arranged on opposite lateral sides of the panel. This facilitates the interconnection of the panels side by side for the circulation of the air flow consecutively between the panels, communicating the (at least one) air outlet opening of one of the panels to the (at least one) air inlet opening of the other adjacent panel so that the air flow circulates between the panels. In the case of interconnected solar collector panels, the air flow is forced to make a longer path along all the panels, thus improving the heat transfer and performance.

According to another aspect of the invention, the (at least one) respective opening is arranged around one single point in the corresponding lateral side of the solar collector panel, i. e. not partially or totally distributed along the corresponding lateral side of the panel. In particular, the solar collector panel may comprise one single opening in the corresponding lateral side of the panel. In this way it makes possible that the air flow is guided in a concentrated or more effective way towards the respective inlet or outlet cross-sections of the ducts. It makes also possible to facilitate the air flow between the interconnected side by side panels, since the connection points between the openings of the corresponding panels are reduced to only one.

Preferably, in a configuration of the solar collector panel in which the (at least one) air inlet opening and the (at least one) air outlet opening are arranged on opposite lateral sides of the panel and around one single point on the corresponding lateral side of the panel, these respective openings are arranged diagonally distanced, thus maximizing the path of air flow between the air inlet and air outlet of the panel.

According to another aspect of the invention it is considered that, in order to collect the solar radiation, the solar collector panel comprises means of receiving the solar radiation such as a solar radiation receiving plate, on which the solar radiation falls and it is utilized by means of the panel.

According to another aspect of the invention, it is considered that the solar collector panel is a hybrid solar collector panel (PV/T), which comprises photovoltaic means for converting the solar radiation into electrical energy, such as a photovoltaic laminate or plate, i. e. it is a photovoltaic panel. Preferably, a solar radiation receiving plate of the panel is a photovoltaic plate. Advantageously, the refrigeration of the photovoltaic means or photovoltaic plate with the air flow of the solar collector panel allows to reduce its temperature of operation and therefore to improve its electrical performance, while the resulting heated air can be utilized at a higher temperature, improving the overall performance of the panel, since it makes possible to generate more usable solar energy per surface area.

In another aspect, the invention also relates to a system of solar collector panels. The system comprises a first and a second solar collector panel of the type that has been described above, connectable side by side on one lateral side of connection of the panels, communicating the (at least one) air outlet opening of one of the panels to the (at least one) air inlet opening of the other panel for the air flow to circulate between the panels. According to this aspect of the invention, the air inlet and outlet openings, air ducts and cross-sections of air inlet and outlet, of each of these panels, are arranged symmetrically to those of the other panel with respect to the connection lateral side.

According to this aspect of the invention an interconnection of the panels is possible side by side, being aligned in series, thereby optimizing the installation space available for the system. The air flow circulates through the interconnected panels following an oscillating or alternating curvilinear path between the air inlet and the outlet openings of the panels, providing a significant improvement in performance in comparison to solar collector panels systems in which the air flow circulates following a rectilinear path between the panels. This allows increasing the output air temperature of the panels even further, due to the increase in the length of the air flow path of when going through the panels from one to another. The symmetry of the panels also makes it possible to provide a compact panel system, since the panels can be arranged side by side one adjacent to another. In addition, the symmetry allows simplifying the installation of the panels system, thus saving time required to install the panels

### Indication of the drawings

Following, the invention will be described in greater detail and by way of example. For it, reference will be made to the attached drawings. The dimensions and proportions shown in the drawings serve to explain the principles described, not being necessarily to scale. In any case this description of the invention is illustrative and not limiting. In the drawings:
Figure 1 shows different parts of an embodiment of a solar collector panel according to the invention in a perspective view.
Figures 2a, 2b and 2c show different parts of an embodiment of a hybrid solar collector panel according to the invention in a plan view. The figure 2a shows the photovoltaic plate of the embodiment in a plan view from its upper side, on which the solar radiation falls. The figure 2b shows the photovoltaic plate of the embodiment in a plan view from its lower side. The figure 2c shows the embodiment in a plan view according to a cross-section by a plane extending over the length and width of the panel.
Figures 3a, 3b and 3c show different configurations of air inlet or air outlet openings according to the invention n lateral view of the panel.
Figures 4a, 4b and 4c show different further embodiments of solar collector panels according to the invention in a plan view according to a cross-section by a plane extending over the length and width of the corresponding panels.
Figures 5a, 5b and 5c show different embodiment examples hybrid solar collector panels according to the invention viewed according to a cross-section by a plane perpendicular to the air ducts of the corresponding panels.
Figure 6 shows an embodiment of a solar collector panels system according to the invention in a plan view according to a cross-section by a plane extending over the length and width of the panels system.
Figure 7 shows an embodiment of a hybrid solar collector panels system according to the invention in an upper plan view. In this figure the system is shown in an installation position, in which the panels are interconnected side by side communicating air inlet and outlet openings of the panels to each other such that the air flow circulates between the panels.

### Embodiment of the invention

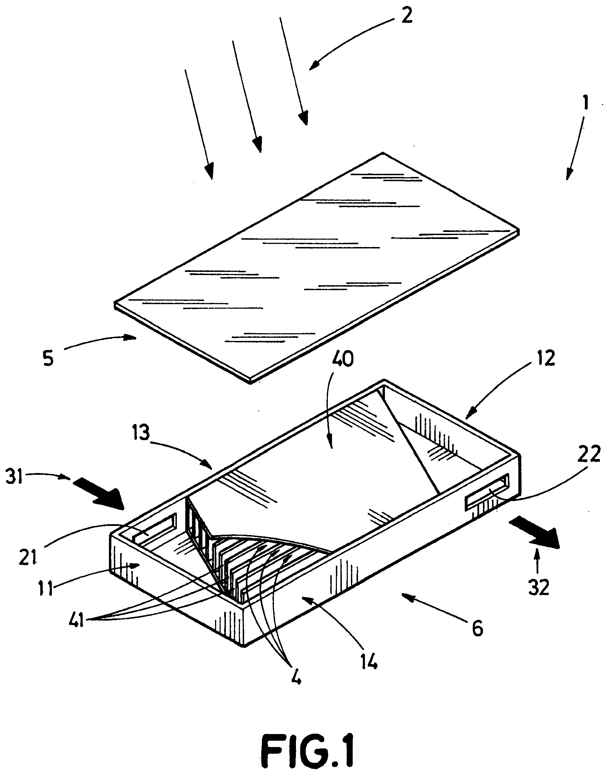

From the figure 1 it can be seen an embodiment of a solar collector panel 1 according to the invention. The panel 1 comprises a heat collector housing 6. In this embodiment the heat collector housing 6 is closed at the top by a solar radiation receiving plate 5 (in the figure 1, it is represented separately for clarity), which may be a photovoltaic plate 50. The solar radiation 2 falls on the solar radiation receiving plate 5, thus collecting the energy of solar radiation 2. The heat collector housing 6 can be traversed by an air flow 31, 32 to evacuate heat from the panel 1, in particular, from the solar radiation receiving plate 5, by air convection. The panel 1 comprises a plurality of air ducts 4 that in the embodiment are in the form of a duct plate 40, wherein the ducts 4 are integrally formed in the plate 40, forming a single piece (in the figure 1, the plate 40 is represented with a top cut to make its interior visible for clarity).

Following with the figure 1, the ducts 4 are arranged in the heat collector housing 6 for ducting the air flow 31, 32 in direction from a first lateral side 11 to a second lateral side 12 of the panel, this second lateral side 12 being opposite to the first lateral side 11. The ducts 4 are arranged in a plane that extends over the length and width of the panel. The air flow 31, 32 is forced in the heat collector housing 6 entering it through an air inlet opening 21 and exiting it through an air outlet opening 22. These openings 21, 22 are arranged on lateral sides 13, 14, other than the lateral sides 11, 12 and, in this embodiment, on opposite to each other lateral sides 13, 14. Between the inlet opening 21 and the outlet opening 22 the air flow is conducted through the ducts 4, entering the ducts 4 through their inlet cross-sections 41 and exiting them through their outlet cross-sections 42 (not visible in figure 1). Both the inlet and the outlet cross-sections 41, 42 are oriented, respectively, towards the inlet opening 21 or the outlet opening 22, transversely with respect to an air flow direction 31, 32 at these openings 21, 22.

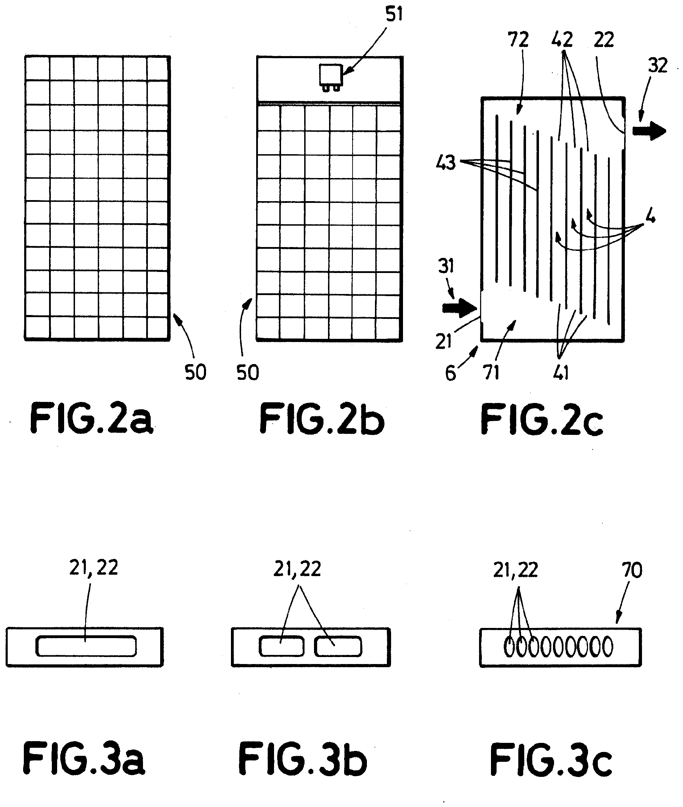

From figures 2a, 2b and 2c, it can be seen with more detail an embodiment of a hybrid solar collector panel according to the invention. The figures 2a and 2b represent a photovoltaic plate 50 seen, respectively, from its upper side and its lower side. On the lower side of the connection plate 50 is arranged an electrical connection box 51 for the electrical connection of the photovoltaic plate 50 to a electrical photovoltaic installation and, where appropriate, to other photovoltaic plates 50. As it is explained in relation to the figure 1, the photovoltaic plate 50 is arranged in the described embodiment by closing the heat collector housing 6 on the top of the ducts 4. Figure 2c shows this heat collector housing 6.

Preferably, for the embodiment of the invention rectangular photovoltaic plates 50 can be used of standard dimensions with 72 cells, which allow optimizing the kWh/m² with respect to smaller photovoltaic panels such as those of 60 cells, being those of 92 cells less widespread in their use. However, according to the invention, photovoltaic panels 50 of any size or form can be used.

Following with Figure 2c, a plurality of air ducts 4 are arranged in the heat collector housing 6 as in the embodiment of the figure 1. The ducts 4 are parallel to the lateral sides on which the air inlet and outlet openings 21, 22 are arranged, through which an air flow 31 and an air flow 32, respectively, enters and exist. The ducts 4 are formed by means of duct walls 43 parallel to said lateral sides. The air flow 31, 32 goes through the heat collector housing 6 from the inlet opening 21 towards the outlet opening 22 through the ducts 4. For this, the air flow 31, 32 enters into the ducts 4 through the inlet cross-sections 41 and exists them through the outlet cross-sections 42.

In this embodiment, the inlet opening 21 and the outlet opening 22 are arranged on opposite lateral sides of the panel and diagonally facing to each other. Characteristically, the respective cross-sections 41, 42 are oriented towards the respective opening 21, 22, transversely to a direction of the air flow 31, 32 at said opening 21, 22.

As can be seen in the same figure 2c, between the inlet opening 21 and the inlet cross-sections 41 the lateral sides of the heat collector housing 6 form an air inlet conduction cavity 71 through which the air flow 31 is conducted from the inlet opening 21 to the inlet cross-sections 41 of the ducts 4. Also, between the outlet cross-sections 42 and the outlet opening 22 the lateral sides of the heat collector housing 6 form an air outlet conduction cavity 72 through which the air flow 32 is conducted from the outlet cross-sections 42 of the ducts 4 towards the outlet opening 22.

As can be seen in figures 1 and 2c, the respective conduction cavities 71, 72, as seen in the plane of figure 2c, are formed, respectively, in a convergent shape with respect to the direction of the air flow 31 at the air inlet opening 21 or in a divergent shape with respect to the direction of the air flow 32 at the air outlet opening 22, in particular, a triangular shape. On the other hand, the ducts 4 or the duct plate 40 as a whole extend in the heat collector housing 6 correspondingly forming a rhombus or rhomboid shape. This configuration with, respectively, a convergent or divergent shape, or triangular shape, of the respective conduction cavities 71, 72 favours, respectively, the entry of the air flow through the inlet cross-sections 41 of the ducts 4 from the inlet opening 21 and the exit of the air flow through the outlet cross-sections 42 of the ducts 4 towards the outlet opening 22.

The size and shape of the conduction cavities 71, 72, in particular, the angle that form the inlet 41 or outlet 42 cross-sections with the respective first and second lateral sides 11, 12 when these cavities 71, 72 are triangular, it can be optimized depending on the size and shape of the respective openings 21, 22 to ensure the homogeneous flow throughout the entire heat collector housing 6. In this regard, it is useful to increase the contact area between the ducts 4 and the solar radiation receiving plate 5 or the photovoltaic plate 50 in order to increase the heat transfer.

In the embodiments according to the invention shown in figures 1 and 2c, the direction of the air flow 31, 32 at the respective openings 21, 22 is parallel to the first and the second lateral sides 11, 12 of the panel. In addition, the ducts 4 are parallel to each other. Also, the ducts 4 are straight and perpendicular to the first and second lateral sides 11, 12 of the panel. These features relating to the shape and arrangement of the ducts 4, in particular, with respect to the openings 21, 22, are advantageous in that they simplify the construction of panel 1, however, other forms and arrangements of ducts 4 are also considered according to the invention.

Figures 3a, 3b and 3c show different configurations of air inlet or air outlet openings 21, 22 according to the invention. An opening 21, 22 can comprise a hole or a plurality of holes located in the same area of the lateral side of the panel, for example, as an air flow conditioner 70. These holes can be any shape such as, for example, rectangular, rounded or oval It is also considered that the openings 21, 22 include an air flow conditioner 70 disposed therein for making the air flow 31, 32 laminar in the entry or exit direction, consequently reducing losses of charge there.

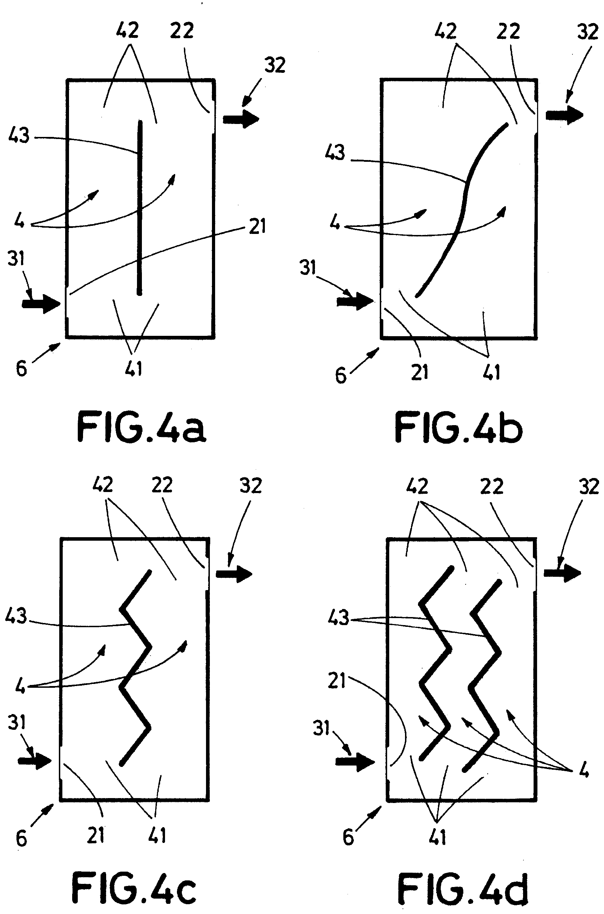

Figures 4a, 4b, 4c and 4d show different further embodiments than the embodiments shown in Figures 1, 2a, 2b and 2c of solar collector panels according to the invention. These additional embodiments constitute variants that differ from each other and with respect to the embodiments shown in figures 1, 2a, 2b and 2c only in the shape, number and arrangement of the air ducts 4.

In the embodiment shown in Figure 4a the ducts 4 are formed by means of a duct wall 43 that is straight and parallel to the lateral sides in which the openings 21, 22 and these lateral sides 21, 22 are arranged. In the embodiment shown in Figure 4b the ducts 4 are formed by means of a duct wall 43 that is curved and by means of the lateral sides on which are arranged the openings 21, 22. In the embodiment shown in figure 4c the ducts 4 are formed by means of a zig-zag duct wall 43 and by means of the lateral sides on which the openings 21, 22 are arranged. In the embodiment shown in Figure 4c the ducts 4 are formed by means of two duct walls 43 in zig-zag, parallel to each other and by means of the lateral sides on which they are the openings 21, 22 are arranged.

Preferably and as it is represented in the shown embodiments according to the invention, the air ducts 4 having the respective cross-sections 41, 42 that are oriented towards the respective openings 21, 22, transversely with respect to an air flow direction 31, 32 at said opening 21, 22, are adjacent. This maximizes the deflection effect of the air flow 31, 32 at the entry and exit of the panel by providing a greater total area of respective cross-sections 41, 42 facing the respective openings 21, 22. In addition, preferably, as set forth in the embodiments of Figures 1, 2a, 2b and 2c, the respective cross-sections 41, 42 are aligned, i.e. forming a straight line in a plan view according to a cross-section by a plane extending over the length and width of the panel. This corresponds to a preferable convergent or divergent shape of, respectively, the inlet or outlet conduction cavities 71, 72, in particular, a triangular shape, as described above.

On the other hand, in all the embodiments explained in this description, the distance between the first and the second lateral sides 11, 12 is greater than the distance between the other lateral sides 13, 14 of the panel, with this it is achieved that the air convection is performed predominantly along the greatest length of the panel. However, it is also considered according to the invention to be the other way, i.e. that the openings 21, 22 are arranged on the shortest lateral sides 11, 12 and correspondingly the ducts 4 in transverse direction.

In relation to the shape of the air ducts 4, also in all embodiments explained in the present description, the cross-section of the duct 4 is rectangular. However, it is considered that it may be of any shape such as, for example, rounded, hexagonal, etc. It is also considered that there may be different ducts 4 at different levels of thickness of the panel, in particular, forming a honeycomb panel structure. Also, air ducts 4 can be closed or open in transverse cross-section. In the case of open cross-sections, these can be formed by walls 43 arranged perpendicular to a plane extending over the length and width of the panel. It is also considered that the ducts 4 may be uniform or variable in transverse cross-section, along the ducting direction of the air flow in the ducts 4.

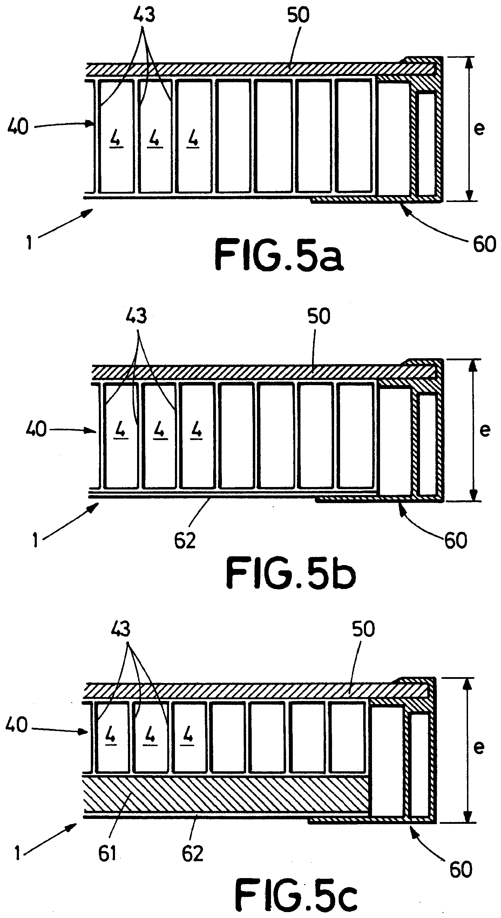

Figures 5a, 5b and 5c show different embodiments of hybrid solar collector panels according to the invention. In the three shown examples, the panel 1 is formed with a perimeter frame 60, a duct plate 40 that integrates the ducts 4 and a solar radiation receiving plate 5, for example, a photovoltaic plate 50. The air inlet and outlet openings 21, 22 are arranged laterally in the perimeter frame 60. The perimeter frame 60 laterally encloses the heat collector housing 6, inside which the duct plate 40 is inserted, the solar radiation receiving plate, for example, the photovoltaic plate 50, closes from above the heat collector housing 6. The photovoltaic plate 50 and the duct plate 40 are fixed to the perimeter frame 60 press fit. For the rest, regarding the realization and operation of these examples of embodiment they correspond to the embodiments of figures 1, 2a, 2b and 2c.

In the exemplary embodiment shown in the figure 5a, the duct plate 4 is formed by a single piece that also closes the heat collector housing 6 from the bottom (not shown). In the embodiment example shown in the figure 5b the panel further includes a cover plate 62 for closing the heat collector housing 6 from the bottom, thus preventing the duct plate 40 performs this function and therefore simplifying the manufacturing of the panel 1. In the exemplary embodiment shown in the figure 5c the panel 1 additionally includes a heat insulation plate 61, thus improving the heat transfer of the panel to the air flow and, therefore, increasing the output air temperature of the panel.

The panel 1 is provided with a thickness e, through which the air flow 31, 32 goes. Advantageously, the thickness e is small to improve the heat transfer through the ducts 4 due to a greater adherence to the duct walls 43 of the air flow going through the ducts 4. It is considered that the thickness e be less than or equal to 60 mm, preferably less than or equal to 50 mm, more preferably, less than or equal to 40 mm.

The perimeter frame 60 is hollow and can be made of aluminium, in a way conventional by itself. The air duct plate 40 that integrates the air ducts 4 can be obtained by extrusion of polymer, in particular, from polycarbonate. The thickness of the walls of the duct plate 40, including the lateral side channel walls 43, is thin to maximize air flow 31, 32 through the ducts 4 and the heat transfer, but it should be thick enough to ensure certain robustness and durability of the panel 1.

As can be seen in figures 5a, 5b and 5c the duct plate 4 is mounted in the perimeter frame 60 laterally spaced from the frame 60 with a certain clearance to facilitate the assembly. It is considered that this distance between the duct plate 4 and frame 60 may also be configured as a duct 4 to be traversed by the air flow.

As can also be seen in figures 5a, 5b and 5c, in the embodiments shown the duct plate 4 is formed with an upper duct wall, a lower duct wall and lateral side duct walls 43 arranged between said upper and lower duct walls. However it is also considered that one of the upper or lower duct walls could be dispenses with the duct plate 4. Likewise, it is also considered any another form of duct plate 4 for ducting the air flow, in particular, by means of lateral side duct walls 43.

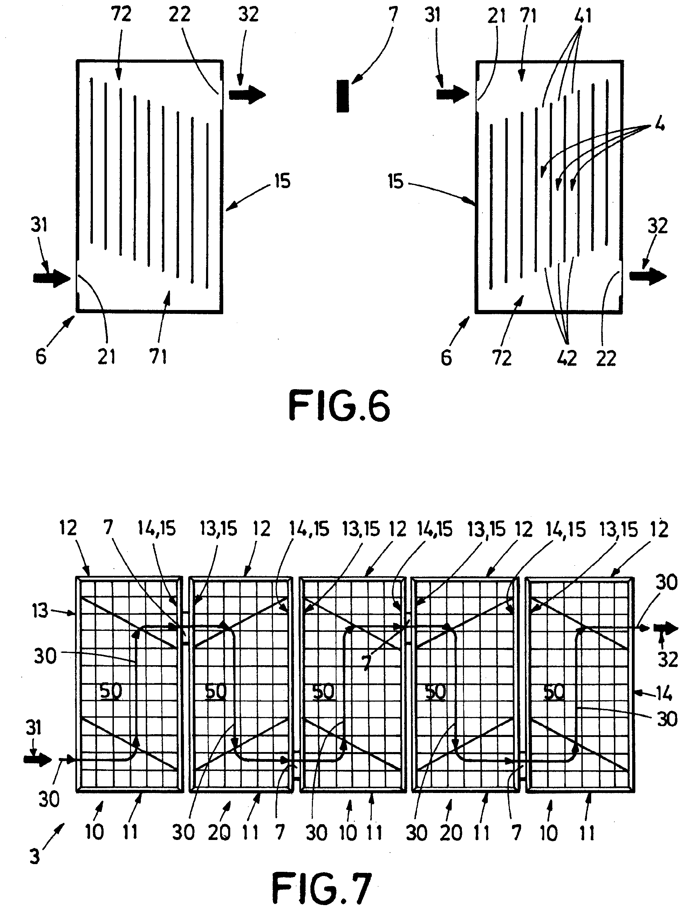

From the figure 6 it can be observed an embodiment of a solar collector panels system according to the invention. The system comprises a first panel 1, 10, corresponding to the heat collector housing 6 represented on the left of the figure 6, and a second panel 20, corresponding to the heat collector housing 6 represented on the right of the figure 6. The panels 1, 10, 20 correspond to panels 1 of the shown embodiments in figures 1, 2a, 2b and 2c. In these panels 10, 20 the air ducts 4 or the duct plate 40 extend forming a rhombus.

These panels 1, 10, 20 are connectable together side by side via a connection lateral side 15 of the panels communicating the air outlet opening 22 of one of the panels and the air inlet opening 21 of the other panel for the air flow 31, 32 to circulate between the panels. For their interconnection the panels 1, 10, 20 are configured in such a manner that the air inlet and air outlet openings 21, 22, the air ducts 4 and the air inlet and air outlet cross-sections 41, 42, of each of these panels 1, 10, 20, are arranged symmetrically to those of the other panel with respect to the connection lateral side 15. Between the panels, in the openings 21, 22 that are connected to each other, a connection seal 7 can be provided for ensuring tightness of the connection between panels 1, 10, 20 to the air flow that circulate between them. In the panel system of the embodiment shown, in which panels the air ducts 4 or the duct plate 40 extend forming a rhombus, these rhombuses are symmetrically arranged in adjacent panels 1, 10, 20. The connection seal 7 can be integrally formed with an air flow conditioner 70 in the openings 21, 22.

Preferably, the openings 21, 22 are arranged in the perimeter frame 60. Therefore, the communication of the air flow 31, 32 between the panels 1, 10, 20 is simplified, thus being possible to dispense with air pipes to be connected to the panels 1, 10, 20 or even to be inserted into the panels. Consequently, the assembly and additional losses of charge are reduced in the connections between the panels 1, 10, 20. The connection between the panels using the frame 60 facilitates the installation and reduces the necessary means for the connection.

In the figure 7 it is shown an embodiment of hybrid solar collector panels system according to the invention in a position of installation. This system consists of three first panels 1, 10 and two seconds panels 20 according to the embodiment shown in figure 6, interconnected alternately side by side via the connection lateral sides 15 and by means of connection seals 7 arranged in the openings 21, 22 that are communicated to each other. As can be observed, the air flow 30, 31, 32, when passing through the panels 1, 10, 20, describes an oscillating path between the inlet opening 21 and the outlet 22 of the system.

In the installation of panels 1, 10, 20 a separation is left between the panels 1, 10, 20 for anchors and mounting structure. The connection seal 7 arranged between panels 1, 10, 20 can be made of an elastic material such as rubber or rubber to facilitate its assembly as well as the damping of the panels between them once installed.

Regarding the connection seal 7, it is considered that it may be configured to be adjusted to each opening 21, 22 of the panel, so that the seal 7 itself has through-holes for the air flow 30, 31, 32. It is also considered that the seals 7 corresponding to openings 21, 22 to communicate are integrally formed, forming a single piece that can be installed during the assembly of the panels system. In the case that the corresponding connection seals 7 are two different parts, it is considered that they are configured such that they can be mechanically connected with each other, for example by press fitting against each other in a plane perpendicular to that of the air flow 30, 31, 32 at the connection.

The electrical connection between the panels of the system is carried out in a conventional way by means of external wiring between the connection boxes 51 of the respective panels 1, 10, 20.

As an example of application of an embodiment according to the invention, it is estimated that by the effect of the increase of the airflow path 30, 31, 32 it can be obtained an improvement in electrical performance of up to 10-15% compared to other configurations of hybrid collector panels refrigerated by air. Regarding the effect on the air heating, given an air flow of approximately 100 m³/h per panel installed at a temperature of 60 °C, it can be refrigerated to 40°C, obtaining hot air at 35°C from air at 25°C.

The invention is not limited to the represented embodiments, but includes all the variants, modifications and combinations included in the scope of the attached claims.

### List of reference signs

1 (Hybrid) solar collector panel
2 Solar radiation
3 System of (hybrid) solar collector panels
4 Air duct
5 Solar radiation receiving plate
6 Heat collector housing
7 Connection seal

10 Solar collector panel (first panel of the panel system)
11 Panel lateral side (first lateral side of the panel)
12 Panel lateral side (second side of the panel)
13 Panel lateral side
14 Panel lateral side
15 Panel lateral side (connection lateral side in the panels system)

20 Solar collector panel (second panel of the panel system)
21 Air inlet opening
22 Air outlet opening

30 Air flow line
31 Inlet air flow
32 Outlet air flow

40 Air duct plate
41 Duct air inlet cross-section
42 Duct air outlet cross-section
43 Duct wall

50 Photovoltaic plate
51 Electrical connection box

60 Perimeter frame
61 Insulation plate
62 Cover plate

70 Air flow conditioner
71 Air inlet conduction cavity
72 Air outlet conduction cavity
e panel thickness

## Claims

1. Solar collector panel (1, 10, 20) for collecting solar radiation (2) and evacuating heat as an air flow (30, 31, 32) goes through it, comprising a plurality of air ducts (4) for ducting the air flow (30, 31, 32) in a direction from a first lateral side (11) to an opposite thereto second lateral side (12) of the panel, the air ducts arranged in a plane that extends over the length and width of the panel, and at least one air inlet opening (21) and/or at least one air outlet opening (22) for, respectively, introducing in or extracting from the panel the air flow (30, 31, 32), said openings (21, 22) arranged in a lateral side (13, 14) of the panel other than the first and second lateral sides (11, 12), the air ducts (4) comprising, respectively, air inlet cross-sections (41) or air outlet cross-sections (42), which are transverse to said ducts (4) and communicated with the respective openings (21, 22), such that the air flow (30, 31, 32), respectively, enters or exits said ducts (4) going through the respective cross-sections (41, 42), **characterized in that** the respective cross-sections (41, 42) are oriented towards the respective opening (21, 22), transversely to a direction of the air flow (30, 31, 32) at said opening (21, 22).

2. Solar collector panel (1, 10, 20) according to claim 1, **characterized in that** the air inlet opening (21) and the air outlet opening (22) are arranged on opposite lateral-sides (13, 14) of the panel.

3. Solar collector panel (1, 10, 20) according to any of claims 1 or 2, **characterized in that** the respective opening (21, 22) is arranged at around one single point in the corresponding lateral side (13, 14) of the panel.

4. Solar collector panel (1, 10, 20) according to any of claims 1 to 3, **characterized in that** the air ducts (4) are adjacent.

5. Solar collector panel (1, 10, 20) according to any of claims 1 to 4, **characterized in that** the respective cross-sections (41, 42) are aligned.

6. Solar collector panel (1, 10, 20) according to any of claims 1 to 5, **characterized in that** the panel (1, 10, 20) has a thickness (e), through which the air flow (30,31, 32) goes, less than or equal to 60 mm, preferably, less than or equal to 50 mm, more preferably, less than or equal to 40 mm.

7. Solar collector panel (1, 10, 20) according to any of claims 1 to 6, **characterized in that** the direction of the air flow (30, 31, 32) at the respective opening (21, 22) is parallel to the first and the second lateral sides (11, 12) of the panel.

8. Solar collector panel (1, 10, 20) according to any of claims 1 to 7, **characterized in that** the air ducts (4) are parallel to each other.

9. Solar collector panel (1, 10, 20) according to any of claims 1 to 8, **characterized in that** the air ducts (4) are straight.

10. Solar collector panel (1, 10, 20) according to claim 9, **characterized in that** the air ducts (4) are perpendicular to the first and the second sides (11, 12) of the panel.

11. Solar collector panel (1, 10, 20) according to any of claims 1 to 10, **characterized in that** the air ducts (4) are closed in transverse cross-section.

12. Solar collector panel (1, 10, 20) according to any of claims 1 to 11, **characterized in that** it comprises an air duct plate (40) that integrally forms the air ducts (4).

13. Solar collector panel (1, 10, 20) according to any of claims 1 to 12, **characterized in that** it comprises a solar radiation reception plate (5), in particular, a photovoltaic laminate (50).

14. Solar collector panel (1, 10, 20) according to any of claims 1 to 13, **characterized in that** it is a hybrid solar collector panel (1, 10, 20).

15. Solar collector panels system (3; 10, 20), comprising a first and a second solar collector panels (10, 20) according to any of claims 1 to 14, connectable to each other side by side via a connection lateral side (15) of the panels for communicating the air outlet opening (22) of one of the panels to the of air inlet opening (21) of the other panel such that the air flow (30, 31, 32) circulates between the panels, **characterized in that** the air inlet and air outlet openings (21, 22), the air ducts (4) and the air inlet and air outlet cross-sections (41, 42) of the first solar collector panel (10) are arranged symmetrically to those of the second solar collector panel (20) with respect to the connection side (15).
